# EUROPEAN PATENT SPECIFICATION

(11) **EP 4 463 510 B1**
(45) Date of publication and mention of the grant of the patent: **17.09.2025**
(21) Application number: 23700580.6
(22) Date of filing: 02.01.2023
(51) Int. Cl.: C08K 7/14, C08K 3/22

(54) **POLYCARBONATE COMPOSITION AND SHAPED ARTICLES MADE THEREFROM**
POLYCARBONATZUSAMMENSETZUNG UND DARAUS HERGESTELLTE FORMKÖRPER
COMPOSITION DE POLYCARBONATE ET ARTICLES FORMÉS FABRIQUÉS À PARTIR DE CELLE-CI

(30) Priority: 10.01.2022 WO PCT/CN2022/071034; 24.01.2022 EP 22152867
(43) Date of publication of application: 20.11.2024
(73) Proprietor: Covestro Deutschland AG, 51373 Leverkusen (DE)
(72) Inventor: ZOU, Changhua, Pudong, 200126 (CN); STILLINGS, Christopher, 35037 Marburg (DE); CAI, Zhihua, Guangzhou Guangdong, 511356 (CN); ZHAO, Xianjin, Guangzhou Guangdong, 511356 (CN); ZHANG, Jin, Guangdong, 511356 (CN); HE, Xue, Guangzhou Guangdong, 511356 (CN)
(74) Representative: Levpat
(86) International application number: PCT/EP2023/050013
(87) International publication number: WO 2023/131585

(56) References cited:
- US-A1- 2007 249 742
- US-A1- 2010 286 321
- US-A1- 2011 086 951

## Description

### TECHNICAL FIELD

The present invention relates to a thermoplastic composition. In particular, the present invention relates to a polycarbonate composition and shaped articles made therefrom.

### BACKGROUND ART

Molded thermoplastic resin products with enhanced aesthetics appearance like special visual effect can offer people emotional reliance and creates a cozy atmosphere. Therefore, aesthetics improvements of thermoplastic resin products get more and more end-customer's attention.

Polycarbonate is a high-performance, amorphous and transparent thermoplastic polymer material that offers manufacturers and designers opportunities for design freedom and aesthetics improvements.

Polycarbonate compositions have been widely used in many industries such as EE&A (Electronic, Electricity & Appliance) and automotive applications, because of their excellent overall performance with good mechanical properties and heat resistance as well as electrical insulating property.

Development of new solution for improving the appearance of polycarbonate products is getting more and more engineering' plastic scientists "attention.

US 2007249742 A1 discloses a resin composition comprising (A) at least one thermoplastic resin, (B) at least one special visual effect additive, and (C) at least one chemical foaming agent present in an amount effective to provide a formed article of the composition with substantially diminished or essentially no visible knit line in a forming process.

US 2012220709 A discloses a polycarbonate resin composition capable of providing a molded article having reduced visibility of a weld line fusion portion, including 60 to 90 mass percent of (A) an aromatic polycarbonate resin, 5 to 20 parts by weight of (B) glass fibers, and 5 to 25 parts by weight of (C) a polymethyl methacrylate resin, (D) 0.005 to 1.5 parts by weight of (D-1) glossy particles having an average particle diameter of 10 µm or more and less than 60 µm, and 0.005 to 5 parts by weight of (D-2) glossy particles having an average particle diameter of 60 to 300 µm, and 0.05 to 0.4 parts by weight of (E) titanium dioxide having an average particle diameter of 0.05 to 3 µm and (F) colorant agent (e.g. aluminum powder). US 2012220709 A keeps silent on feathered visual effect.

Considering requirements with regard to aesthetics of thermoplastic products, there is great demand of polycarbonate compositions, from which the articles produced have an aesthetic appearance, for example have a feathered visual effect. However, the thermoplastic products with feathered visual effect have not been reported yet.

Thus, there is a need to provide a polycarbonate composition, which can be used to produce articles with feathered visual effect.

### SUMMARY OF THE INVENTION

An object of the present invention is to provide a polycarbonate composition, which can be used to produce articles with feathered visual effect.

Another object of the present invention is to provide a shaped article made from a polycarbonate composition, which has feathered visual effect.

It has now been found, surprisingly, that such objects can be achieved by the present invention.

Thus, according to a first aspect, the present invention provides a polycarbonate composition comprising, relative to the total weight of the composition:
A) from 60 wt.% to 97.5 wt.% of at least one aromatic polycarbonate;
B) from 1 wt.% to 22 wt.% of at least one chopped glass fibre, and
C) from 0.05 wt.% to 1 wt.% of at least one metallic pigment flake with a particle size of 5 µm to 35 µm, wherein the metal is selected from Al, Cu, Au, Ag, and Pt.

According to a second aspect, the present invention provides a shaped article made from the polycarbonate composition according to the present invention.

According to a third aspect, the present invention provides a method for preparing the shaped article mentioned above, comprising injection moulding, extrusion moulding, or thermoforming the polycarbonate composition according to the present invention.

The inventors have found that the article made from the polycarbonate composition according to the present invention has a feathered visual effect on the surface thereof.

Other subjects and characteristics, aspects and advantages of the present invention will be set forth in the description that follows. It is to be understood that both the foregoing general description and the following detailed description are exemplary and explanatory only and are not restrictive.

### BRIEF DESCRIPTION OF THE DRAWINGS

The present invention will be described and explained in detail in conjunction with the drawings hereinafter.

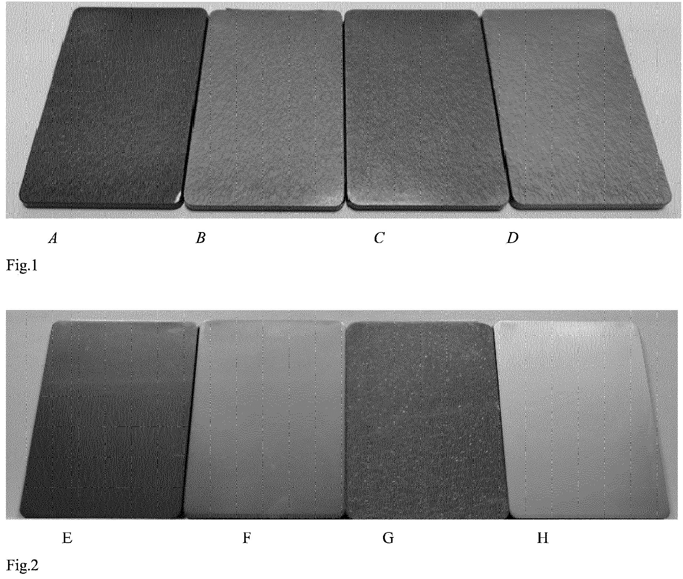

Fig. 1 shows the appearance of plaques made of compositions of examples according to the invention, wherein A: example 11 according to the invention, B: example 3 according to the invention, C: example 12 according to the invention, D: example 10 according to the invention.
Fig. 2 shows the appearance of plaques made of compositions of comparative examples, wherein E: comparative example 6, F: comparative example 9, G: comparative example 8, H: comparative example 7.

### DETAILED DESCRIPTION OF THE INVENTION

In that which follows and unless otherwise indicated, the limits of a range of values are included within this range, in particular in the expressions "between...and..." and "from ... to ...".

Throughout the present application, the term "comprising" is to be interpreted as encompassing all specifically mentioned components as well as optional, additional, unspecified ones.

Unless defined otherwise, all technical and scientific terms used herein have the same meaning as commonly understood by one of ordinary skill in the art to which the present invention pertains. When the definition of a term in the present description conflicts with the meaning as commonly understood by those skilled in the art the present invention belongs to, the definition described herein shall apply.

Unless otherwise specified, all numerical values expressing amount of ingredients and the like which are used in the description and claims are to be understood as being modified by the term "about".

As used herein, "feathered visual effect" means a plaque made from the composition has randomly oriented filaments with shimmering fluffy appearance.

As used herein, "obvious feathered visual effect" means that at least 8 of 10 volunteers invited to give comments on the appearance of an article deem there is feathered visual effect on the surface of the article.

All percentages in the present application refer to weight percentage, unless otherwise specified.

### Component A

The composition according to the present invention comprises at least one aromatic polycarbonate as component A.According to the invention, "aromatic polycarbonates" or else just "polycarbonates" is to be understood as meaning both homopolycarbonates and copolycarbonates, in particular aromatic ones. These polycarbonates may be linear or branched in known fashion. According to the invention, mixtures of polycarbonates may also be used.

A "polycarbonate material" or a material "based on polycarbonate" is a thermoplastic material preferably comprising at least 50 wt.% polycarbonate, more preferably at least 60 wt.% polycarbonate, even more preferably at least 65 wt.% polycarbonate.

A portion, preferably up to 80 mol%, more preferably of 20 mol% to 50 mol%, of the carbonate groups in the polycarbonates used in accordance with the invention may have been replaced by aromatic dicarboxylic ester groups. Polycarbonates of this type that incorporate not only acid radicals derived from carbonic acid but also acid radicals derived from aromatic dicarboxylic acids in the molecular chain are referred to as aromatic polyester carbonates. For the purposes of the present invention, they are covered by the umbrella term "thermoplastic aromatic polycarbonates".

Replacement of the carbonate groups by the aromatic dicarboxylic ester groups proceeds essentially stoichiometrically and also quantitatively and the molar ratio of the reaction partners is therefore also reflected in the final polyester carbonate. The aromatic dicarboxylic ester groups can be incorporated either randomly or blockwise.

Aromatic polycarbonates selected in accordance with the invention preferably have weight-average molecular weights M_{w} of 15 000 to 40 000 g/mol, more preferably of 20 000 to 32 000 g/mol, even more preferably of 23 000 to 28 000 g/mol. The values for M_{w} here are determined by a gel permeation chromatography, calibrated against bisphenol A polycarbonate standards using dichloromethane as eluent, calibration with linear polycarbonates (made of bisphenol A and phosgene) of known molar mass distribution from PSS Polymer Standards Service GmbH, Germany; calibration according to method 2301-0257502-09D (2009 Edition in German) from Currenta GmbH & Co. OHG, Leverkusen. The eluent is dichloromethane. Column combination of crosslinked styrenedivinylbenzene resins. Diameter of analytical columns: 7.5 mm; length: 300 mm. Particle sizes of column material: 3 µm to 20 µm. Concentration of solutions: 0.2% by weight. Flow rate: 1.0 ml/min, temperature of solutions: 30°C. Detection using a refractive index (RI) detector.

The polycarbonates are preferably produced by the interfacial process or the melt transesterification process, which have been described many times in the literature.

With regard to the interfacial process reference is made for example to H. Schnell, "Chemistry and Physics of Polycarbonates", Polymer Reviews, Vol. 9, Interscience Publishers, New York 1964 p. 33 et seq., to Polymer Reviews, Vol. 10, "Condensation Polymers by Interfacial and Solution Methods", Paul W. Morgan, Interscience Publishers, New York 1965, Chapt. VIII, p. 325, to Dres. U. Grigo, K. Kircher and P. R- Müller "Polycarbonate" in Becker/Braun, Kunststoff-Handbuch, Volume 3/1, Polycarbonate, Polyacetale, Polyester, Celluloseester, Carl Hanser Verlag Munich, Vienna 1992, pp. 118-145 and also to EP 0 517 044 A1.

The melt transesterification process is described, for example, in the "Encyclopedia of Polymer Science", Vol. 10 (1969), Chemistry and Physics of Polycarbonates, Polymer Reviews, H. Schnell, Vol. 9, John Wiley and Sons, Inc. (1964), and in patent specifications DE 10 31 512 A and US 6,228,973 B1.

Particulars pertaining to the production of polycarbonates are disclosed in many patent documents spanning approximately the last 40 years. Reference may be made here by way of example to Schnell, "Chemistry and Physics of Polycarbonates", Polymer Reviews, Volume 9, Interscience Publishers, New York, London, Sydney 1964, to D. Freitag, U. Grigo, P.R. Miller, H. Nouvertné, BAYER AG, "Polycarbonates" in Encyclopedia of Polymer Science and Engineering, Volume 11, Second Edition, 1988, pages 648-718, and finally to U. Grigo, K. Kirchner and P.R. Miiller "Polycarbonate" in Becker/Braun, Kunststoff-Handbuch, Volume 3/1, Polycarbonate, Polyacetale, Polyester, Celluloseester, Carl Hanser Verlag Munich, Vienna 1992, pages 117-299.

The production of aromatic polycarbonates is effected for example by reaction of dihydroxyaryl compounds with carbonic halides, preferably phosgene, and/or with aromatic dicarboxyl dihalides, preferably benzenedicarboxyl dihalides, by the interfacial process, optionally using chain terminators and optionally using trifunctional or more than trifunctional branching agents, production of the polyester carbonates being achieved by replacing a portion of the carbonic acid derivatives with aromatic dicarboxylic acids or derivatives of the dicarboxylic acids, specifically with aromatic dicarboxylic ester structural units according to the carbonate structural units to be replaced in the aromatic polycarbonates. Preparation via a melt polymerization process by reaction of dihydroxyaryl compounds with, for example, diphenyl carbonate is likewise possible.

Dihydroxyaryl compounds suitable for the production of polycarbonates are for example hydroquinone, resorcinol, dihydroxydiphenyls, bis(hydroxyphenyl)alkanes, bis(hydroxyphenyl)cycloalkanes, bis(hydroxyphenyl) sulfides, bis(hydroxyphenyl) ethers, bis(hydroxyphenyl) ketones, bis(hydroxyphenyl) sulfones, bis(hydroxyphenyl) sulfoxides, α,α'-bis(hydroxyphenyl)diisopropylbenzenes, phthalimidines derived from derivatives of isatin or phenolphthalein and the ring-alkylated, ring-arylated and ring-halogenated compounds thereof.

Preferred dihydroxyaryl compounds are 4,4'-dihydroxydiphenyl, 2,2-bis(4-hydroxyphenyl)propane (bisphenol A), 2,4-bis(4-hydroxyphenyl)-2-methylbutane, 1,1-bis(4-hydroxyphenyl)-p-diisopropylbenzene, 2,2-bis(3-methyl-4-hydroxyphenyl)propane, dimethylbisphenol A, bis(3,5-dimethyl-4-hydroxyphenyl)methane, 2,2-bis(3,5-dimethyl-4-hydroxyphenyl)propane, bis(3,5-dimethyl-4-hydroxyphenyl)sulfone, 2,4-bis(3,5-dimethyl-4-hydroxyphenyl)-2-methylbutane, 1,1-bis(3,5-dimethyl-4-hydroxyphenyl)-p-diisopropylbenzene and 1,1-bis(4-hydroxyphenyl)-3,3,5-trimethylcyclohexane and also the bisphenols (I) to (III) 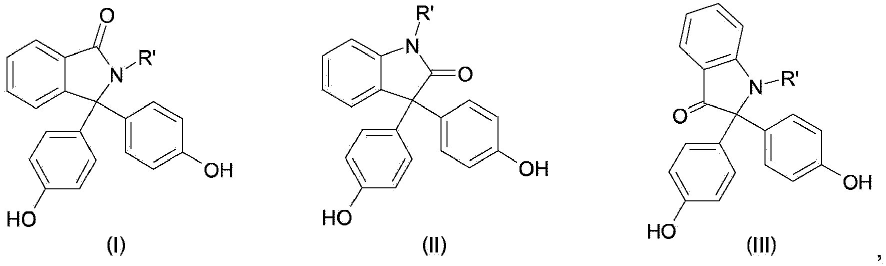 in which R' in each case stands for C₁- to C₄-alkyl, aralkyl or aryl, preferably for methyl or phenyl, very particularly preferably for methyl.

Particularly preferred dihydroxyaryl compounds are 2,2-bis(4-hydroxyphenyl)propane (bisphenol A), 2,2-bis(3,5-dimethyl-4-hydroxyphenyl)propane, 1,1-bis(4-hydroxyphenyl)cyclohexane, 1,1-bis(4-hydroxyphenyl)-3,3,5-trimethylcyclohexane, 4,4'-dihydroxybiphenyl, and dimethylbisphenol A and also the diphenols of formulae (I), (II) and (III).

These and other suitable dihydroxyaryl compounds are described for example in US 3 028 635 A, US 2 999 825 A, US 3 148 172 A, US 2 991 273 A, US 3 271 367 A, US 4 982 014 A und US 2 999 846 A, in DE 1 570 703 A, DE 2063 050 A, DE 2 036 052 A, DE 2 211 956 A and US 2 999 846 A, in DE 1 570 703 A, DE 2063 050 A, DE 2 036 052 A, DE 2 211 956 A and DE 3 832 396 A, in FR 1 561 518, in the monograph "H. Schnell, Chemistry and Physics of Polycarbonates, Interscience Publishers, New York 1964" and also in JP 62039/1986 A, JP 62040/1986 A and JP 105550/1986 A.

In the case of homopolycarbonates only one dihydroxyaryl compound is used; in the case of copolycarbonates two or more dihydroxyaryl compounds are used. The dihydroxyaryl compounds employed, similarly to all other chemicals and assistants added to the synthesis, may be contaminated with the contaminants from their own synthesis, handling and storage. However, it is desirable to use raw materials of the highest possible purity.

Suitable carbonic acid derivatives are for example phosgene and diphenyl carbonate.

Suitable chain terminators that may be used in the production of polycarbonates are monophenols. Suitable monophenols are for example phenol itself, alkylphenols such as cresols, p-tert-butylphenol, cumylphenol and mixtures thereof.

Preferred chain terminators are the phenols mono- or polysubstituted by linear or branched C₁-to C₃₀-alkyl radicals, preferably unsubstituted or substituted by tert-butyl. Particularly preferred chain terminators are phenol, cumylphenol and/or p-tert-butylphenol.

The amount of chain terminator to be employed is preferably 0.1 to 5 mol% based on the moles of diphenols employed in each case. The addition of the chain terminators may be effected before, during or after the reaction with a carbonic acid derivative.

Suitable branching agents are the trifunctional or more than trifunctional compounds familiar in polycarbonate chemistry, in particular those having three or more than three phenolic OH groups. Suitable branching agents are for example 1,3,5-tri(4-hydroxyphenyl)benzene, 1,1,1-tri(4-hydroxyphenyl)ethane, tri(4-hydroxyphenyl)phenylmethane, 2,4-bis(4-hydroxyphenylisopropyl)phenol, 2,6-bis(2-hydroxy-5'-methylbenzyl)-4-methylphenol, 2-(4-hydroxyphenyl)-2-(2,4-dihydroxyphenyl)propane, tetra(4-hydroxyphenyl)methane, tetra(4-(4-hydroxyphenylisopropyl)phenoxy)methane and 1,4-bis((4',4"-dihydroxytriphenyl)methyl)benzene and 3,3-bis(3-methyl-4-hydroxyphenyl)-2-oxo-2,3-dihydroindole.The amount of the branching agents for optional employment is preferably 0.05 mol% to 2.00 mol%, based on moles of dihydroxyaryl compounds used in each case. The branching agents may be either initially charged together with the dihydroxyaryl compounds and the chain terminators in the aqueous alkaline phase or added dissolved in an organic solvent before the phosgenation. In the case of the transesterification process the branching agents are employed together with the dihydroxyaryl compounds.

Particularly preferred polycarbonates are the homopolycarbonate based on bisphenol A, the homopolycarbonate based on 1,1-bis(4-hydroxyphenyl)-3,3,5-trimethylcyclohexane, 4,4'-dihydroxybiphenyl, and the copolycarbonates based on the two monomers bisphenol A and 1,1-bis(4-hydroxyphenyl)-3,3,5-trimethylcyclohexane and also homo- or copolycarbonates derived from the diphenols of formulae (I), (II) and (III) 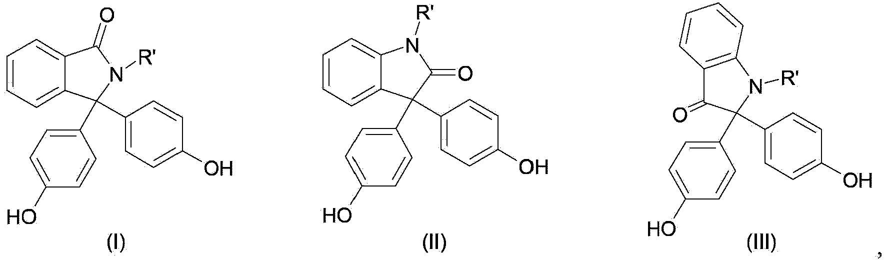 in which R' in each case stands for C₁- to C₄-alkyl, aralkyl or aryl, preferably for methyl or phenyl, very particularly preferably for methyl.

Preferred are also polycarbonates for the production of which dihydroxyaryl compounds of the following formula (1a) have been used: 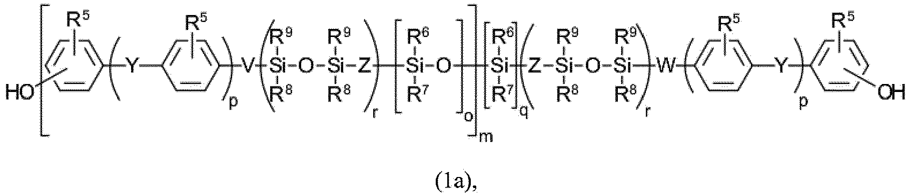 wherein
R⁵ stands for hydrogen or C₁- to C₄-alkyl, C₁- to C₄- alkoxy, preferably for hydrogen or methyl or methoxy particularly preferably for hydrogen,
R⁶, R⁷, R⁸ and R⁹ mutually independently stand for C₆- to C₁₂-aryl or C₁- to C₄-alkyl, preferably phenyl or methyl, in particular for methyl,
Y stands for a single bond, SO₂-, -S-, -CO-, -O-, C₁- to C₆-alkylene, C₂- to C₅-alkylidene, C₆-to C₁₂-arylene, which can optionally be condensed with further aromatic rings containing hetero atoms, or for a C₅- to C₆-cycloalkylidene residue, which can be singly or multiply substituted with C₁-to C₄-alkyl, preferably for a single bond, -O-, isopropylidene or for a Cs-to C₆-cycloalkylidene residue, which can be singly or multiply substituted with C₁- to C₄-alkyl,
V stands for oxygen, C₂- to C₆-alkylene or C₃- to C₆-alkylidene, preferably for oxygen or C₃-alkylene,
p, q and r mutually independently each stand 0 or 1,
if q = 0, W is a single bond, if q = 1 and r = 0 is, W stands for -O-, C₂- to C₆-alkylene or C₃-to C₆-alkylidene, preferably for -O- or C₃-alkylene,
if q = 1 and r = 1, W and V mutually independently stand for C₂- to C₆-alkylene or C₃- to C₆-alkylidene, preferably for C₃ alkylene,
Z stands for C₁- to C₆-alkylene, preferably C₂-alkylene,
o stands for an average number of repeating units from 10 to 500, preferably 10 to 100 and
m stands for an average number of repeating units from 1 to 10, preferably 1 to 6, particularly preferably 1.5 to 5.

It is also possible to use dihydroxyaryl compounds, in which two or more siloxane blocks of general formula (1a) are linked via terephthalic acid and/or isophthalic acid under formation of ester groups.

Especially preferable are (poly)siloxanes of the formulae (2) and (3) 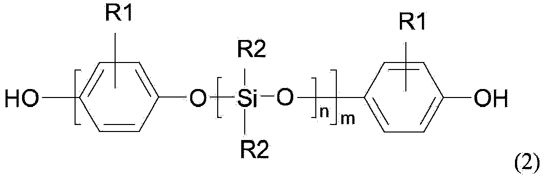 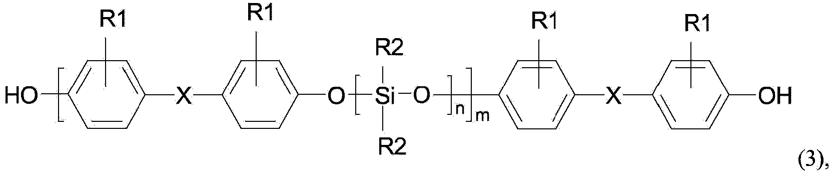
wherein R¹ stands for hydrogen, C₁- to C₄-alkyl, preferably for hydrogen or methyl and especially preferably for hydrogen,
R² mutually independently stand for aryl or alkyl, preferably for methyl,
X stands for a single bond, -SO₂-, -CO-, -O-, -S-, C₁- to C₆-alkylene, C₂- to C₅-alkylidene or for C₆- to C₁₂-arylene, which can optionally be condensed with further aromatic rings containing hetero atoms,
X stands for a single bond, -SO₂-, -CO-, -O-, -S-, C₁- to C₆-alkylene, C₂- to C₅-alkylidene, C₅-to C₁₂-cycloalkylidene or for C₆- to C₁₂-arylene, which can optionally be condensed with further aromatic rings containing hetero atoms,
X preferably stands for a single bond, isopropylidene, C₅- to C₁₂-cycloalkylidene or oxygen, and especially preferably stands for isopropylidene,
n means an average number from 10 to 400, preferably 10 and 100, especially preferably 15 to 50 and
m stands for an average number from 1 to 10, preferably 1 to 6 and especially preferably from 1.5 to 5.

Also preferably the siloxane block can be derived from one of the following structures: 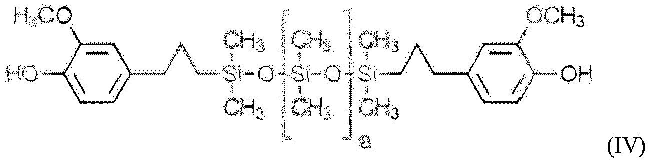 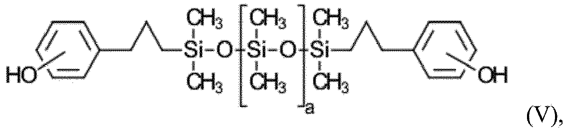 preferably (Va) 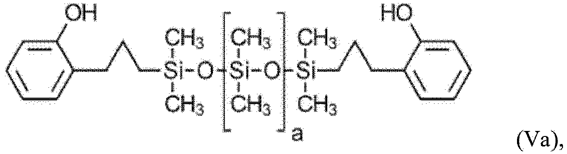 or 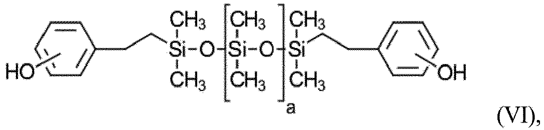 wherein a in formulae (IV), (V) und (VI) means an average number from 10 to 400, preferably from 10 to 100 and especially preferably from 15 to 50.

It is equally preferable, that at least two of the same or different siloxane blocks of the general formulae (IV), (V) or (VI) are linked via terephthalic acid and/isophthalic acid under formation of ester groups.

It is also preferable, if p = 0 in formula (1a), V stands for C₃-alkylene,
if r = 1, Z stands for C₂-alkylene, R⁸ and R⁹ stand for methyl,
if q = 1, W stands for C₃-alkylene,
if m = 1, R⁵ stands for hydrogen or C₁- to C₄-alkyl, preferably for hydrogen or methyl, R⁶ and R⁷ mutually independently stand for C₁- to C₄-alkyl, preferably methyl, and o stands for 10 to 500.

Copolycarbonates with monomer units of the general formula (1a), in particular with bisphenol A, and in particular the production of those copolycarbonates are described in WO 2015/052106 A2.

As examples of aromatic polycarbonate, mention can be made to Makrolon^{®} 2408, an aromatic polycarbonate having a weight average molecular weight of about 24,000 g/mol produced from bisphenol A and phosgene, Makrolon^{@}2600 available from Covestro Polymers Co. Ltd, a linear bisphenol A polycarbonate, having a weight-average molecular weight of 26000 g/mol as determined by GPC in dichloromethane with polycarbonate as standard, and Makrolon FS2000, available from Covestro Polymers Co. Ltd, a linear bisphenol A polycarbonate, having a weight-average molecular weight of 20,500 g/mol as determined by GPC in dichloromethane with polycarbonate as standard.

Preferably, the aromatic polycarbonates used according to the present invention have a weight average molecular weight (Mw) of at least 10000 g/mol, preferably of from 20000 g/mol to 320000 g/mol, more preferably from 23000 to 28000 g/mol, determined by GPC in dichloromethane with polycarbonate as standard.

Preferably, the polycarbonate is a linear thermoplastic aromatic polycarbonate.

The aromatic polycarbonate is present in the composition according to the present invention in an amount ranging from 60 wt.% to 97.5 wt.%, preferably from 80 wt.% to 97.5 wt.%, even more preferably from 85 wt.% to 96.7 wt.%, relative to the total weight of the composition.

### Component B

The composition according to the present invention comprises at least one chopped glass fiber as component B.

Chopped glass fibers are well known in the art, are commercially available, and can be prepared by a typical method in the art.

The glass fiber may have a round, flat, or irregular cross-section. Preferably, the glass fiber have a round cross-section.

Preferably, the chopped glass fiber has a diameter of from 8 µm to 20 µm. More preferably, the chopped glass fiber has a diameter of from 10 µm to 18 µm. Even more preferably, the chopped glass fiber has a diameter of from 13 µm to 15 µm.

Preferably, the chopped glass fiber has a length of 1 mm or more, preferably, 1.5 mm to 15 mm.

More preferably, the chopped glass fiber has a length of from 2 mm to 6 mm, even more preferably 2.5 mm to 6 mm. Even more preferably, the chopped glass fiber has a length of from 3.5 mm to 5.5 mm.

The chopped glass fiber is present in the composition according to the present invention in an amount ranging from 1 to 22 wt.%, preferably from 3 wt.% to 20 wt.%, more preferably from 3 wt.% to 10 wt.%, relative to the total weight of the composition.

### Component C

The composition according to the present invention comprises at least one metallic pigment flake is used in the polycarbonate composition as component C.

As used herein, the term "metallic pigment flakes" are metallic pigment flakes coated with, or made of metals, alloys and oxides thereof.

The metallic pigment flake has a particle size (Dv50 average value) of 5 to 35 µm as determined according to a method known to the person skilled in the art, preferably via laser diffraction methods according to ISO 13320:2009.

As used herein, the Dv50 average value of the particle size indicates a particle size, for which 50 weight percent by volume of the relevant material have a larger particle size and 50 weight percent have a smaller particle size of the average value.

Preferably, the metallic pigment flake has a particle size (Dv50 average value) of 8 to 14 µm.

Preferably, the metal is selected from Al, Cu, Au, Ag, Pt and mixtures thereof. Most preferably, the metal is aluminum.

Preferably, the metallic pigment flake is selected from the group consisting of aluminum flakes, brass flakes, bronze flakes, copper flakes, gold flakes, silver flakes, platinum flakes, and mixtures thereof.

It is preferred that the metallic pigment flake is incorporated in the composition according to the present invention in the form of a flake in a carrier, such as a wax and/or a resin.

As an example of commercial products of metallic pigment flakes, mention can be made of Silvet^{®}210-30-E1, Silvex^{®}210-20-C, and Silvet^{®} 960-30-E1 from Silberline.

The metallic pigment flake is present in the composition according to the present invention in an amount ranging from 0.05 wt.% to 1 wt.%, preferably from 0.1 wt.% to 0.5 wt.%, more preferably from 0.1 wt.% to 0.2 wt.%, relative to the total weight of the composition.

Thus, preferably, the metallic pigment flake/glass fiber weight ratio is at least 0.003.

### Component D

Preferably, the composition according to the present invention comprises at least one organic colorant as component D.

Examples of organic colorants which can be used in the composition according to the present invention are those based on anthraquinone, azo, azomethine, benzanthrone, quinacridone, quinophthalone, dioxazine, flavanthrone, indanthrene, isoindoline, isoindolinone, methine, perinone, perylene, pyrazole, phthalocyanine, pyranthrone, pyrrolopyrrole, and/or thioindigo.

Preferably, the composition according to the present invention comprises at least one organic colorant selected from anthraquinone-based colorants, perinone-based colorants, phthalocyanine-based colorants, indanthrene-based colorants, pyrazole-based colorants, and combinations thereof.

As examples of anthraquinone-based colorants, mention can be made of those of the following structures (1) and (2): 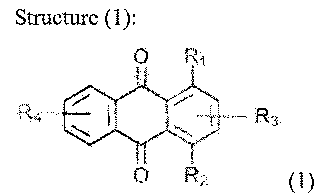
wherein R₁ and R₂ are each independently H, OH, OR⁵, NH₂ or NHR⁵, wherein R⁵ is selected from alkyl, cycloalkyl, phenyl and substituted and fused phenyls,
preferably, R₁ and R₂ are each independently H, OH, NH₂ or NHR⁵, wherein R⁵ is further preferably an unsubstituted or substituted phenyl radical, more preferably is selected from 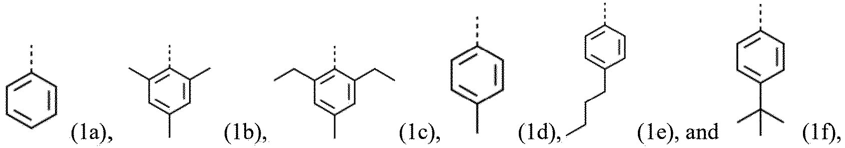
   R₃ is H; alkyl, preferably methyl, ethyl, propyl, butyl, isobutyl, or tert-butyl; alkoxy, preferably methoxy, ethoxy, propyloxy, butoxy, isobutoxy, or tert-butoxy; and phenyloxy; especially preferably H or phenyloxy, and
   R₄ is H, OH, or p-methylphenyl-NH-;

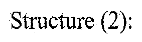

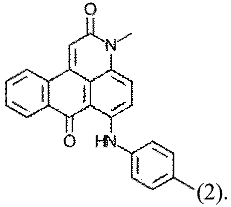

Especially preferred among the anthraquinone-based colorants of the structure (1) are the following structures: 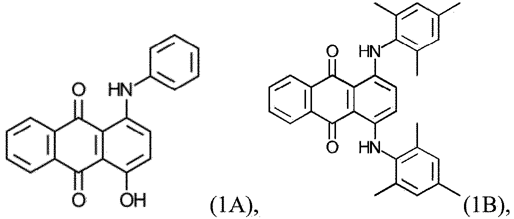 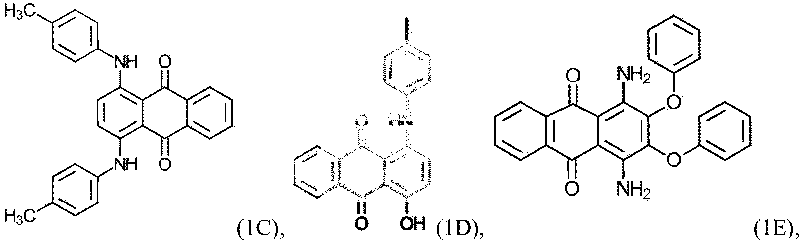 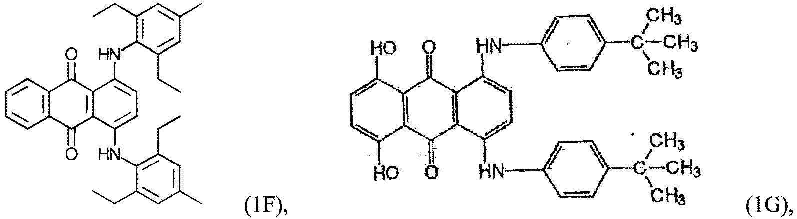 and

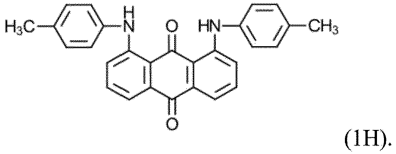

The colorant of structure (1A) is known as Disperse Violet 103 (Color Index 60724; CAS 19286-75-0).

The colorant of the structure (1B) is available, for example, under the Keyplast Blue KR trade name.

The colorant of the structure (1C) is available, for example, under the Macrolex Green 5B trade name from Lanxess AG.

The colorant of the formula (1D) is available, for example, under the Macrolex Violet B trade name from Lanxess AG.

The colorant of the formula (1E) is available, for example, under the Macrolex Red Violet R trade name from Lanxess AG.

The colorant of the formula (1F) is available, for example, under the Macrolex Blue RR trade name from Lanxess AG.

The colorant of the formula (1G) is available, for example, under the Macrolex Green G trade name from Lanxess AG.

The colorant of the formula (1H) is available, for example, under the Macrolex Violet 3R trade name from Lanxess AG.

The colorant of the structure (2) is known, for example, as Solvent Red 52 and is available under the Macrolex Red 5B trade name from Lanxess AG.

As examples of perinone-based colorants, mention can be made of those of the following structures (3) and (4): 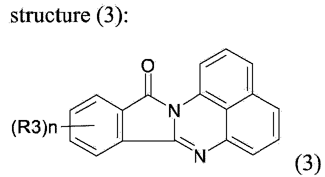 wherein
R3 is preferably halogen, especially preferably Cl,
n is an integer of 0-4 and, more preferably, n = 4,

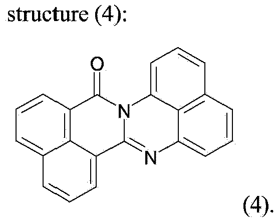

A further preferred colorant of structure (3) is one with n = 0, and so all the substituents on the ring in this case are H.

The colorants of structure (3) are available, for example, as Macrolex^{®} Orange 3G or Macrolex^{®} Red EG from Lanxess AG.

The colorant of structure (4) is available, for example, under the Macrolex^{®} Red E2G trade name from Lanxess AG.

As examples of phthalocyanine-based colorants, mention can be made of those of the following structures (5a) and (5b):

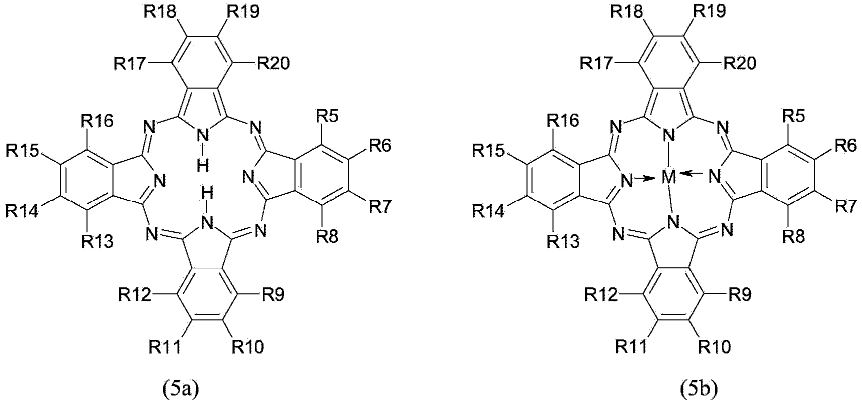

The R5-R20 radicals are each independently hydrogen, methyl, ethyl, propyl, isopropyl, butyl, isobutyl, tert-butyl, pentyl, neopentyl, hexyl, thexyl, fluorine, chlorine, bromine, sulfone, or CN,
M is selected from aluminum, nickel, cobalt, iron, zinc, copper, and manganese.

Preferably, R5-R20 is the same in all positions. Further preferably, R5-R20 is H in all positions. In an alternative embodiment, R5-R20 is Cl in all positions.

Preferred are aluminum phthalocyanine (with M being aluminum, R = H, CAS: 14154-42-8), nickel phthalocyanine (with M being nickel, R = H, CAS: 14055-02-8), cobalt phthalocyanine (with M being cobalt, R = H, CAS: 3317-67-7), iron phthalocyanine (with M being iron, R = H, CAS: 132-16-1), zinc phthalocyanine (with M being zinc, R = H, CAS: 14320-04-08), copper phthalocyanine (with M being copper, R = H, CAS: 147-14-8), polychlorocopper phthalocyanine (with M being copper, R = H and Cl, CAS: 1328-53-6), hexadecachlorophthalocyanine (with M being copper, R = Cl, CAS: 28888-81-5), hexadecabromophthalocyanine (with M being copper, R = Br, CAS: 28746-04-5), manganese phthalocyanine (with M being manganese, R = H, CAS: 14325-24-7).

Especially preferred is the combination of M = Cu and R = H for all positions. For instance, a colorant of the structure (5b) with M = Cu and R5-R20) = H is available as Heliogen^{®} Blue K 6911D or Heliogen^{®} Blue K 7104 KW from BASF AG, Ludwigshafen.

Colorants of the structure (5a) are available, for example, as Heliogen^{®} Blue L 7460 from BASF AG, Ludwigshafen.

As examples of indanthrene-based colorants, mention can be made of those of the following structure (6): 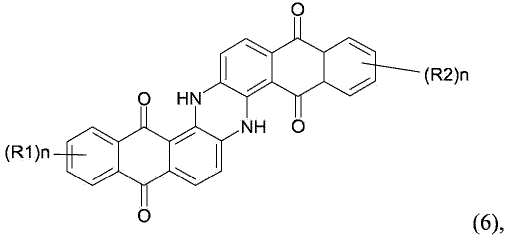 wherein
- R1 and R2 are each independently a linear or branched alkyl radical or halogen, preferably methyl, ethyl, propyl, isopropyl, butyl, isobutyl, tert-butyl, pentyl, neopentyl, hexyl, thexyl, or Cl, further preferably methyl, Cl and more preferably Cl,
- n is a natural number from 0 to 4.

In a particularly preferred embodiment, n = 0 in all rings, and so all R1 and R2 = H.

Colorants of this structure (6) are commercially available as the Paliogen Blue series from BASF AG.

When a colorant of the structure (6) is used, preference is given especially to that having a bulk volume (determined to DIN ISO 787-11: 1981) of 2 l/kg - 10 l/kg, preferably 3 l/kg - 8 l/kg, a specific surface area (determined to DIN 66132: 1975) of 5 m²/g-60 m²/g, preferably 10 m²/g-55 m²/g, and a pH (determined to DIN ISO 787-9:1981) of 4-9.

As an example of pyrazole-based colorants, mention can be made of the colorant of the following structure (7):

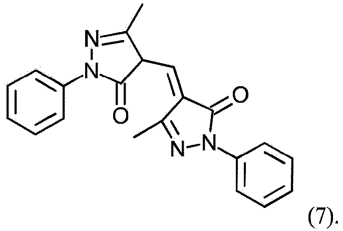

The pyrazole-based colorant of the structure (7) is available, for example, under the Macrolex Yellow 3g trade name from Lanxess.

Preferably, the compositions of the present invention comprise at least one colorant selected from anthraquinone-based colorants of the structures (1) and (2), perinone-based colorants of structures (3) and (4), phthalocyanine-based colorants of structures (5a) and (5b), indanthrene-based colorants of structure (6), pyrazole-based colorants of structure (7), and a combination thereof.

More preferably, the colorant is selected from perinone-based colorants of structures (3) and (4), pyrazole-based colorants of structure (7), and a combination thereof.

If presents, preferably, the organic colorant is present in the composition according to the present invention in an amount ranging from 0.001 wt.% to 0.3 wt.%, preferably from 0.002 wt.% to 0.25 wt.%, more preferably from 0.003 wt.% to 0.25 wt.%, particularly preferably from 0.01 wt.% to 0.2 wt.% , based on the total weight of the composition.

### Other ingredients

The polycarbonate composition according to the present invention may further comprise one or more other components (additives) in addition to the components A)-D) listed above.

Preferably, the other component is selected from heat stabilizers and antioxidants such as organic phosphites and phosphonites; processing aids; carriers; internal lubricants and/or external lubricants; flame retardants; mold release agents; and impact modifiers.

The person skilled in the art can adjust the amount of the other components as desired.

The composition according to the present invention may comprise an impact modifier or may comprise no impact modifier.

The impact modifier can be selected from those commonly used in polycarbonate compositions, such as ABS (acrylonitrile-butadiene-styrene).

Preferably, the composition comprises, relative to the total weight of the composition:
A) from 85 wt.% to 96.7 wt.% of at least one aromatic polycarbonate;
B) from 3 wt.% to 10 wt.% of at least one chopped glass fibre having a length of 3.5 mm to 5.5 mm, and
C) from 0.05 wt.% to 0.20 wt.% of at least one metallic pigment flake with a particle size of 5 to 30 µm, wherein the metal is selected from Al, Cu, Au, Ag, and Pt.
Particularly preferred, the composition according to the invention consists of, relative to the total weight of the composition:
A) from 85 wt.% to 96.7 wt.% of at least one aromatic polycarbonate;
B) from 3 wt.% to 10 wt.% of at least one chopped glass fibre having a length of 3.5 mm to 5.5 mm, and
C) from 0.05 wt.% to 0.20 wt.% of at least one metallic pigment flake with a particle size of 5 to 30 µm, wherein the metal is selected from Al, Cu, Au, Ag, and Pt,
D) optionally one or more additives selected from the group consisting of heat stabilizers, antioxidants, processing aids, carriers, internal lubricants, external lubricants, flame retardants, anti dripping agents, mold release agents, impact modifiers.

The inventors have found that the articles made from the polycarbonate compositions according to the present invention have a feathered visual effect on the surface thereof.

### Preparation of the polycarbonate composition

The polycarbonate composition according to the present invention can be prepared by mixing of the materials desired in the composition in a known manner and subjecting the mixture to melt compounding and melt extrusion at a temperature between 240 °C and 320 °C in conventional units, such as internal kneaders, and twin-screw extruders.

For example, the materials desired in the composition according to the present invention are first blended in a high speed mixer. Other low shear processes, including but not limited to hand mixing, can also accomplish this blending.

The blend is then fed into the throat of a twin-screw extruder via a hopper. Alternatively, at least one of the components can be incorporated into the composition by feeding directly into the extruder at the throat and/or downstream through a side stuffer. Additives can also be compounded into a masterbatch with a desired polymeric resin and fed into the extruder. The extruder is generally operated at a temperature higher than that necessary to cause the composition to flow. The extrudate is immediately quenched in a water bath and pelletized. Such pellets can be used for subsequent moulding, shaping or forming.

Melt blending methods are preferred due to the availability of melt blending equipment in commercial polymer processing facilities.

Illustrative examples of equipment used in such melt processing methods include: co-rotating and counter-rotating extruders, co-kneaders, and various other types of extrusion equipment.

The temperature of the melt in the processing is preferably minimized in order to avoid excessive degradation of the polymers. It is often desirable to maintain the melt temperature between 240° C and 320° C in the molten composition, although higher temperatures can be used provided that the residence time of the resin in the processing equipment is kept short.

In some embodiments, the melt processed composition exits processing equipment such as an extruder through small exits in a die. The resulting strands of the molten resin are cooled by passing the strands through a water bath. The cooled strands can be chopped into small pellets for packaging and further handling.

In some embodiments, the aromatic polycarbonate, the metallic pigment flake and the organic colorant, and optional components if any, are mixed firstly and the mixture is fed into a twin-screw extruder, and then the chopped glass fiber is fed into the twin-screw extruder at the end to mix with the blend, and then be extruded through exits, cooled and chopped to obtain pellets of the composition according to the present invention.

### Shaped articles

The polycarbonate composition according to the present invention can be used, for example for the production of various types of shaped articles.

Thus, according to the second aspect, the present invention provides a shaped article made from the polycarbonate composition according to the invention.

The polycarbonate composition according to the present invention can be molded into shaped articles such as, automobile interior, housing for electronic device, for example, cellphone, assess point, adaptor, switch, etc.

The shaped article made from the polycarbonate composition according to the present invention has a specific aesthetic appearance.

### Preparation of shaped articles

According to the third aspect, the present invention provides a method for preparing the shaped article mentioned above, comprising injection moulding, extrusion moulding, or thermoforming the polycarbonate composition according to the present invention.

During preparing shaped articles with the composition according to this invention, the melting temperature for the moulding process preferably is in the range of 250-320°C, more preferably 255-210°C, even more preferably 260-300°C. The mold temperature could be in the range of 40-110 °C, preferably 50-110 °C.

### Examples

The following examples are put forth so that those of ordinary skill in the art can have a better understanding on how the composition disclosed and claimed herein can be made and evaluated, and are intended to be purely exemplary and are not intended to limit the disclosure.

### Materials used

### Component A

PC: aromatic homopolycarbonate based on BPA having an average molecular weight of about 28,000 g/mol as measured according to the method mentioned previously, available from Covestro, Ltd.

PC+ABS: a mixture of 72.6 wt.% aromatic homopolycarbonate based on BPA, having an average molecular weight of about 28,000g/mol as measured according to the method mentioned previously, 0.5 of wt.% ABS and 26.9 wt.% SAN.

### Component B

GF-1: glass fiber, CS 108 F-14P from the company European Owens Corning fiberglas SPRL, chopped glass fiber with a length up to 3.5-5.5 mm and a diameter of from 13-15 µm.

GF-2: glass fiber, MF 7980 from the company Lanxess, milled glass fiber with a length around 190 µm, a diameter around 14 µm.

### Component C

Al-1: Silvet^{®}210-30-E1 from Silberline, aluminum pigment flake in a free flowing, non-dusting, granular form with particle size around 8 µm and with 30 wt.% of PE Wax/Resin as carrier.

A1-2: Silvex^{®}210-20-C from Silberline, aluminum pigment flake in a free flowing, non-dusting, granular form with particle size around 8 µm and with 20 wt.% of Mineral Oil Dampened Powder/Paste as carrier.

Al-3: Silvet^{®} 960-30-E1 from Silberline, aluminum pigment flake in a free flowing, non-dusting, granular form with particle size around 14 µm and with 30 wt.% of PE Wax/Resin as carrier.

A1-4: Silvet^{®} ET2025 from Silberline, aluminum pigment flake in a free flowing, non-dusting, granular form with particle size around 33 µm and with 30 wt.% of PE Wax/Resin as carrier.

A1-5: Silvet^{®} 437-30-El from Silberline, is a very fine particle size aluminum flake pigment in a free flowing, non-dusting, granular form with particle size around 110 µm and with 30 wt.% of PE Wax/Resin as carrier.

A1-6: Sparkle Silvet^{®} 300-10-E1 from Silberline, aluminum pigment having a spherical pigment particle geometry with particle size around 43 µm and with 10 wt.% of PE Wax/Resin as carrier.

A1-7: Sparkle Silvet^{®} 600-10-E1 from Silberline, aluminum pigment having a spherical pigment particle geometry with particle size around 30 µm and with 10 wt.% of PE Wax/Resin as carrier.

### Component D

Colorant 1: a perinone-based colorant, MACROLEX^{®} Red EG from Lanxess AG Germany.

Colorant 2: pyrazole-based colorant, MACROLEX^{®} Yellow 3G from Lanxess AG Germany.

Colorant 3: a perinone-based colorant, MACROLEX^{®} Red E2G from Lanxess AG Germany.

Colorant 4: an anthraquinone-based colorant, MACROLEX^{®} Violet B from Lanxess AG Germany.

Colorant 5: a phthalocyanine colorant, Heliogen^{®} Blue K7014 from BASF

Colorant 6: an anthraquinone-based colorant, MACROLEX^{®} Blue RR from Lanxess AG Germany.

### Measurements

The physical properties of compositions obtained were tested as follows.

The combustion behavior was measured on 125 mm x 12.5 mm bars with 1.5 mm thickness according to UL94:2015. The melt flowability was evaluated by means of the melt volume-flow rate (MVR) measured in accordance with ISO1133:2011 at a temperature of 300 °C and with a die load of 1.2 kg.

Feathered visual effect of specimens was evaluated by visual check and recorded as follows: "NA" stands for no feathered visual effect, ++ stands for visible but not obvious feathered visual effect, +++ stands for obvious feathered visual effect, +++++ stands for very obvious feathered visual effect, the more +, the more obvious feather effect.

### Examples 1-13 according to the invention (IE1-IE13) and Comparative Examples 1-10 (CE1-CE10)

The materials listed in Tables 1 and 2 were compounded on a ZSK-25 twin-screw extruder at a speed of rotation of 500 rpm, a throughput of 40 kg/h, and a machine temperature of 300 °C. After extrusion, the melted polymer mixture was cooled and cut into cylindrical plastic granular shape with a diameter of 3-4 mm and a length of 3-4 mm. The amount of materials are given in wt.% relative to the total weight of the composition.

The finished granules were processed into plastic samples on an injection molding machine with a melting temperature of 300°C and a mold temperature around 110°C.

The physical properties of compositions obtained were tested and the results were summarized in Tables 1 and 2.

**Table 1**

| Ingredients* | IE1 | CE1 | CE2 | CE3 | CE4 | CE5 | CE6 | CE7 | CE8 | CE9 | CE10 |
|---|---|---|---|---|---|---|---|---|---|---|---|
| | wt. % | wt. % | wt.% | wt.% | wt.% | wt.% | wt.% | wt.% | wt.% | wt.% | wt.% |
| PC | 89.66 | 88.86 | 89.66 | 96.66 | 94.76 | 89.59 | 99.7 | 99.795 | 89.59 | 99.65 | 88.86 |
| GF-1 (chopped) | 10 | 10 | 10 | - | - | 10 | - | - | 10 | - | 10 |
| GF-2 (milled) | - | - | - | 3 | 5 | - | - | - | - | - | - |
| Al-1 (flake, 8 µm) | - | - | - | 0.2 | 0.1 | - | - | - | - | - | - |
| Al-3 (flake, 14 µm) | - | - | - | - | - | - | - | 0.2 | - | 0.2 | - |
| Al-4 (flake, 33 µm) | 0.2 | - | - | - | - | - | 0.1 | - | - | - | - |
| Al-5 (flake, 110 µm) | - | - | - | - | - | 0.2 | - | - | 0.2 | - | - |
| Al-6 (spherical,43 µm) | - | 1 | 0.2 | - | - | - | - | - | - | - | - |
| Al-7 (spherical, 30 µm) | - | - | - | - | - | - | - | - | - | - | 1 |
| Colorant 1 | 0.12 | 0.12 | 0.12 | 0.12 | 0.12 | 0.2 | - | - | - | - | 0.12 |
| Colorant 2 | 0.02 | 0.02 | 0.02 | 0.02 | 0.02 | 0.01 | - | - | 0.01 | 0.12 | 0.02 |
| Colorant 3 | - | - | - | - | - | - | - | 0.003 | 0.2 | 0.03 | - |
| Colorant 5 | - | - | - | - | - | - | 0.2 | 0.001 | - | - | - |
| Colorant 6 | - | - | - | - | - | - | - | 0.001 | - | - | - |
| Feathered visual effect | ++ | NA | NA | NA | NA | NA | NA | NA | NA | NA | NA |

| | | | | | | | | | | | |
|---|---|---|---|---|---|---|---|---|---|---|---|
| *: the amounts of the ingredients are indicated as the amounts of the active ingredients and the carriers if any. | | | | | | | | | | | |

NA stands for no feathered visual effect, ++ stands for visible but not obvious feathered visual effect, +++ stands for obvious feathered visual effect, +++++ stands for very obvious feathered visual effect; the more +, the more obvious feathered visual effect.

From Table 1, it can be seen that the composition of example 1 according to the invention comprising a metallic pigment flake with a particle size of 33 µm demonstrates visible but not obvious featured visual effect.

The compositions of comparative examples 5 and 8 comprising a metallic pigment flake with a particle size of 110 µm do not demonstrate the featured visual effect at all.

The compositions of comparative examples 1 and 2 comprising spherical aluminum particles rather than aluminum flakes do not demonstrate the featured visual effect.

The compositions of comparative examples 3 and 4 comprising milled glass fiber rather than chopped glass fibers do not demonstrate the featured visual effect.

The compositions of comparative examples 6, 7, and 9 comprising no glass fiber do not demonstrate the featured visual effect.

The composition of comparative example 10 comprising a spherical pigment particle geometry with particle size of 30 µm demonstrates does not demonstrate the featured visual effect.

**Table 2**

| Ingredients* | IE2 | IE3 | IE4 | IE5 | IE6 | IE7 | IE8 | IE9 | IE10 | IE11 | IE12 | IE13 |
|---|---|---|---|---|---|---|---|---|---|---|---|---|
| | wt.% | wt.% | wt.% | wt.% | wt.% | wt.% | wt.% | wt.% | wt. % | wt.% | wt.% | wt.% |
| PC | 89.59 | 89.29 | 89.69 | 96.59 | 94.69 | 96.69 | 94.69 | 62.29 | 79.59 | 89.8 | 89.67 | 89.59 |
| ABS/SAN | - | - | - | - | - | - | - | 27.4 | - | - | - | - |
| GF-1 (chopped) | 10 | 10 | 10 | 3 | 5 | 3 | 5 | 10 | 20 | 10 | 10 | 10 |
| GF-2 (milled) | - | - | - | - | - | - | - | - | - | - | - | - |
| Al-1 (flake, 8 µm) | - | - | - | 0.2 | 0.1 | - | - | - | - | - | - | - |
| Al-2 (flake, 8 µm) | - | 0.5 | 0.1 | - | - | 0.1 | 0.1 | 0.1 | 0.2 | - | - | - |
| Al-3 (flake, 14 µm) | 0.2 | - | - | - | - | - | - | - | - | 0.2 | 0.2 | 0.2 |
| Colorant 1 | - | - | - | 0.2 | 0.2 | - | - | - | - | - | - | - |
| Colorant 2 | 0.2 | 0.2 | 0.2 | 0.01 | 0.01 | 0.2 | 0.2 | 0.2 | 0.2 | - | - | 0.01 |
| Colorant 3 | 0.01 | 0.01 | 0.01 | - | - | 0.01 | 0.01 | 0.01 | 0.01 | - | - | 0.2 |
| Colorant 4 | - | - | - | - | - | - | - | - | - | - | 0.03 | - |
| Colorant 5 | - | - | - | - | - | - | - | - | - | - | 0.1 | - |
| Combustion behavior | V0 | V0 | V0 | V0 | V0 | V0 | V0 | | | | | |
| MVR (cm³/10 min) | 6.9 | 6.8 | 5.9 | 7.2 | 7 | 7.3 | 7.1 | | | | | |
| Feathered visual effect | +++++ | ++++ | +++++ | +++++ | +++++ | +++++ | +++++ | ++++ | +++ | +++++ | +++++ | +++++ |

| | | | | | | | | | | | | |
|---|---|---|---|---|---|---|---|---|---|---|---|---|
| *: the amounts of the ingredients are indicated as the amounts of the active ingredients and the carriers if any. +++ stands for obvious feathered visual effect, +++++ stands for very obvious feathered visual effect; the more +, the more obvious feathered visual effect. | | | | | | | | | | | | |

From Table 2, it can be seen that compositions of examples 2-13 according to the invention demonstrate good feathered visual effect (from +++ to +++++).

It can be also seen from examples 2-13 according to the invention that when the composition comprises from 3 wt.% to 10 wt.% of a chopped glass fibre, and from 0.05 wt.% to 0.20 wt.% of a metallic pigment flake with a particle size of 5 µm to 35 µm, wherein the metal is selected from Al, Cu, Au, Ag, and Pt, a plaque made thereof demonstrates very obvious feathered visual effect.

In addition, the compositions according to the present invention have good flame-retardancy, as determined according to UL94:2015.

## Claims

1. A polycarbonate composition comprising, relative to the total weight of the composition:
A) from 60 wt.% to 97.5 wt.% of at least one aromatic polycarbonate;
B) from 1 wt.% to 22 wt.% of at least one chopped glass fibre, and
C) from 0.05 wt.% to 1 wt.% of at least one metallic pigment flake with a particle size of 5 µm to 35 µm, wherein the metal is selected from Al, Cu, Au, Ag, and Pt.

2. The composition according to claim 1, wherein the metallic pigment flake/glass fiber weight ratio is at least 0.003.

3. The composition according to claim 1 or 2, wherein the chopped glass fiber has a length of 1.5 mm to 15 mm.

4. The composition according to any of claims 1-3, wherein the chopped glass fiber has a round cross-section.

5. The composition according to any of claims 1-4, wherein the chopped glass fiber has a diameter of 8 µm to 20 µm.

6. The composition according to any of claims 1-5, wherein the chopped glass fiber is present in an amount ranging from 3 wt.% to 20 wt.%, relative to the total weight of the composition.

7. The composition according to any of claims 1-6, wherein the metallic pigment flake has a particle size of 8 to 14 µm.

8. The composition according to any of claims 1-7, wherein the metallic pigment flake is present in an amount ranging from 0.1 wt.% to 0.5 wt.%, relative to the total weight of the composition.

9. The composition according to any of claims 1-8, wherein the composition further comprises from 0.001 wt.% to 0.3 wt.% of at least one organic colorant.

10. The composition according to claim 9, wherein the organic colorant is selected from the group consisting of colorants based on anthraquinone, azo, azomethine, benzanthrone, quinacridone, quinophthalone, dioxazine, flavanthrone, indanthrene, isoindoline, isoindolinone, methine, perinone, perylene, pyrazole, phthalocyanine, pyranthrone, pyrrolopyrrole, thioindigo and mixtures thereof.

11. The composition according to claim 9 or 10, wherein the organic colorant is selected from the group consisting of perinone-based colorants of structures (3) and (4), 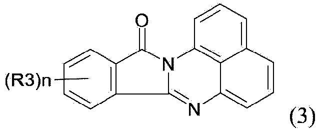 wherein
R3 is preferably halogen,
n is an integer of 0-4, 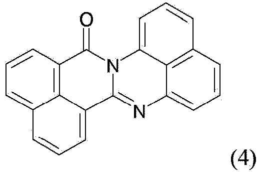
pyrazole-based colorants of structure (7), 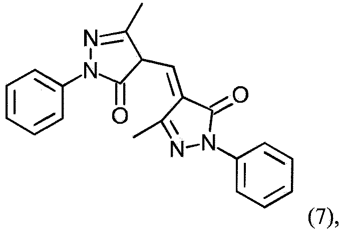
and a combination thereof.

12. The composition according to any of claims 1-11, wherein the composition comprises no impact modifier.

13. The composition according to claim 1, comprising, relative to the total weight of the composition:
A) from 85 wt.% to 96.7 wt.% of an aromatic polycarbonate;
B) from 3 wt.% to 10 wt.% of a chopped glass fibre having a length of 3.5 mm to 5.5 mm; and
C) from 0.05 wt.% to 0.20 wt.% of a metallic pigment flake with a particle size of 5 to 30 µm, wherein the metal is selected from Al, Cu, Au, Ag, and Pt.

14. A shaped article made from the composition according to any of claims 1-13.

## Patentansprüche

1. Polycarbonatzusammensetzung umfassend, bezogen auf das Gesamtgewicht der Zusammensetzung:
A) von 60 Gew.-% bis 97,5 Gew.-% an wenigstens einem aromatischen Polycarbonat,
B) von 1 Gew.-% bis 22 Gew.-% an wenigstens einer geschnittenen Glasfaser und
C) von 0,05 Gew.-% bis 1 Gew.-% an wenigstens einer metallischen Pigmentflocke mit einer Partikelgröße von 5 µm bis 35 µm, wobei das Metall ausgewählt ist aus Al, Cu, Au, Ag und Pt.

2. Zusammensetzung nach Anspruch 1, wobei das Gewichtsverhältnis metallische-Pigmentflocke/Glasfaser wenigstens 0,003 beträgt.

3. Zusammensetzung nach Anspruch 1 oder 2, wobei die geschnittene Glasfaser eine Länge von 1,5 mm bis 15 mm aufweist.

4. Zusammensetzung nach einem der Ansprüche 1-3, wobei die geschnittene Glasfaser einen runden Querschnitt aufweist.

5. Zusammensetzung nach einem der Ansprüche 1-4, wobei die geschnittene Glasfaser einen Durchmesser von 8 µm bis 20 µm aufweist.

6. Zusammensetzung nach einem der Ansprüche 1-5, wobei die geschnittene Glasfaser in einer Menge in dem Bereich von 3 Gew.-% bis 20 Gew.-%, bezogen auf das Gesamtgewicht der Zusammensetzung, vorhanden ist.

7. Zusammensetzung nach einem der Ansprüche 1-6, wobei die metallische Pigmentflocke eine Partikelgröße von 8 bis 14 µm aufweist.

8. Zusammensetzung nach einem der Ansprüche 1-7, wobei die metallische Pigmentflocke in einer Menge in dem Bereich von 0,1 Gew.-% bis 0,5 Gew.-%, bezogen auf das Gesamtgewicht der Zusammensetzung, vorhanden ist.

9. Zusammensetzung nach einem der Ansprüche 1-8, wobei die Zusammensetzung ferner von 0,001 Gew.-% bis 0,3 Gew.- % an wenigstens einem organischen Farbmittel umfasst.

10. Zusammensetzung nach Anspruch 9, wobei das organische Farbmittel ausgewählt ist aus der Gruppe bestehend aus Farbmitteln auf der Basis von Anthrachinon, Azo, Azomethin, Benzanthron, Chinacridon, Chinophthalon, Dioxazin, Flavanthron, Indanthren, Isoindolin, Isoindolinon, Methin, Perinon, Perylen, Pyrazol, Phthalocyanin, Pyranthron, Pyrrolopyrrol, Thioindigo und Gemischen davon.

11. Zusammensetzung nach Anspruch 9 oder 10, wobei das organische Farbmittel ausgewählt ist aus der Gruppe bestehend aus Farbmitteln auf Perinonbasis der Strukturen (3) und (4), 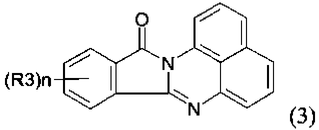 wobei
R3 vorzugsweise Halogen ist,
n eine ganze Zahl von 0-4 ist, 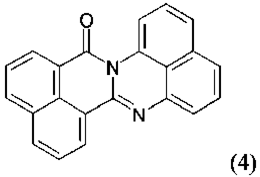
Farbmitteln auf Pyrazolbasis der Struktur (7), 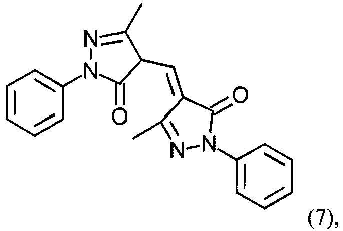
und einer Kombination davon.

12. Zusammensetzung nach einem der Ansprüche 1-11, wobei die Zusammensetzung keinen Schlagzähmodifikator umfasst.

13. Zusammensetzung nach Anspruch 1, umfassend bezogen auf das Gesamtgewicht der Zusammensetzung:
A) von 85 Gew.-% bis 96,7 Gew.-% an einem aromatischen Polycarbonat;
B) von 3 Gew.-% bis 10 Gew.-% an einer geschnittenen Glasfaser mit einer Länge von 3,5 mm bis 5,5 mm; und
C) von 0,05 Gew.-% bis 0,20 Gew.-% an einer metallischen Pigmentflocke mit einer Partikelgröße von 5 bis 30 µm, wobei das Metall ausgewählt ist aus Al, Cu, Au, Ag und Pt.

14. Formkörper, hergestellt aus der Zusammensetzung nach einem der Ansprüche 1 - 13.

## Revendications

1. Composition de polycarbonate comprenant, par rapport au poids total de la composition :
A) de 60 % en poids à 97,5 % en poids d'au moins un polycarbonate aromatique ;
B) de 1 % en poids à 22 % en poids d'au moins une fibre de verre coupée et
C) de 0,05 % en poids à 1 % en poids d'au moins un pigment métallique en paillettes présentant une taille des particules de 5 µm à 35 µm, le métal étant choisi parmi Al, Cu, Au, Ag et Pt.

2. Composition selon la revendication 1, dans laquelle le rapport pondéral pigment métallique en paillettes/fibre de verre est d'au moins 0,003.

3. Composition selon la revendication 1 ou 2, dans laquelle la fibre de verre coupée a une longueur de 1,5 mm à 15 mm.

4. Composition selon l'une quelconque des revendications 1 à 3, dans laquelle la fibre de verre coupée a une section transversale ronde.

5. Composition selon l'une quelconque des revendications 1 à 4, dans laquelle la fibre de verre coupée a un diamètre de 8 µm à 20 µm.

6. Composition selon l'une quelconque des revendications 1 à 5, dans laquelle la fibre de verre coupée est présente en une quantité allant de 3 % en poids à 20 % en poids, par rapport au poids total de la composition.

7. Composition selon l'une quelconque des revendications 1 à 6, dans laquelle le pigment métallique en paillettes a une taille des particules de 8 à 14 µm.

8. Composition selon l'une quelconque des revendications 1 à 7, dans laquelle le pigment métallique en paillettes est présent en une quantité allant de 0,1 % en poids à 0,5 % en poids, par rapport au poids total de la composition.

9. Composition selon l'une quelconque des revendications 1 à 8, la composition comprenant en outre de 0,001 % en poids à 0,3 % en poids d'au moins un colorant organique.

10. Composition selon la revendication 9, dans laquelle le colorant organique est choisi dans le groupe constitué par les colorants à base d'anthraquinone, de composé azoïque, d'azométhine, de benzanthrone, de quinacridone, de quinophtalone, de dioxazine, de flavanthrone, d'indanthrène, d'isoindoline, d'isoindolinone, de méthine, de périnone, de pérylène, de pyrazole, de phtalocyanine, de pyranthrone, de pyrrolopyrrole, de thioindigo et les mélanges de ceux-ci.

11. Composition selon la revendication 9 ou 10, dans laquelle le colorant organique est choisi dans le groupe constitué par les colorants à base de périnone de structure (3) ou (4), 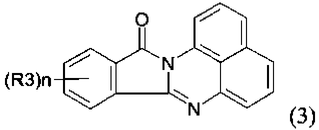 où
R3 est de préférence un atome d'halogène,
n est un nombre entier de 0 à 4, 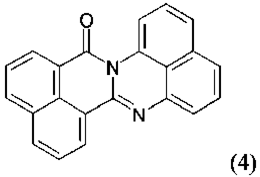
les colorants à base de pyrazole de structure (7), 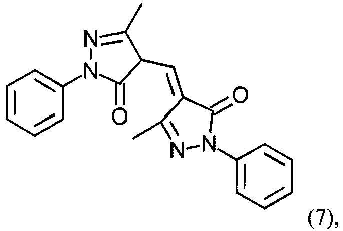
et une association de ceux-ci.

12. Composition selon l'une quelconque des revendications 1 à 11, la composition ne comprenant pas de modificateur de la résistance au choc.

13. Composition selon la revendication 1, comprenant, par rapport au poids total de la composition :
A) de 85 % en poids à 96,7 % en poids d'un polycarbonate aromatique ;
B) de 3 % en poids à 10 % en poids d'une fibre de verre coupée ayant une longueur de 3,5 mm à 5,5 mm ; et
C) de 0,05 % en poids à 0,20 % en poids d'un pigment métallique en paillettes présentant une taille des particules de 5 à 30 µm, le métal étant choisi parmi Al, Cu, Au, Ag et Pt.

14. Article façonné fabriqué à partir de la composition selon l'une quelconque des revendications 1 à 13.
